(19) Europäisches Patentamt
European Patent Office
Office européen des brevets

(11) Numéro de publication : **0 442 768 B1**

# (12) FASCICULE DE BREVET EUROPEEN

(45) Date de publication du fascicule du brevet : **25.08.93 Bulletin 93/34**

(51) Int. Cl.$^5$ : **E06B 5/16,** B32B 17/10

(21) Numéro de dépôt : **91400102.9**

(22) Date de dépôt : **18.01.91**

(54) **Vitrage résistant au feu et procédé de fabrication.**

Le dossier contient des informations techniques présentées postérieurement au dépôt de la demande et ne figurant pas dans le présent fascicule.

(30) Priorité : **22.01.90 DE 4001677**

(43) Date de publication de la demande : **21.08.91 Bulletin 91/34**

(45) Mention de la délivrance du brevet : **25.08.93 Bulletin 93/34**

(84) Etats contractants désignés : **AT BE CH DE DK ES FR GB IT LI LU NL SE**

(56) Documents cités :
**DE-C- 2 713 849**
**DE-C- 3 530 968**

(73) Titulaire : **SAINT-GOBAIN VITRAGE INTERNATIONAL**
**"Les Miroirs" 18, avenue d'Alsace**
**F-92400 Courbevoie (FR)**
(84) **BE CH DK ES FR GB IT LI LU NL SE AT**
Titulaire : **VEGLA Vereinigte Glaswerke GmbH**
**Viktoriaallee 3-5**
**D-52066 Aachen (DE)**
(84) **DE**

(72) Inventeur : **Holzer, Gerhard**
**Hubertusweg 8**
**W-5100 Aachen (DE)**
Inventeur : **Gelderie, Udo**
**Lindenstrasse 106**
**W-5100 Aachen (DE)**

(74) Mandataire : **Breton, Jean-Claude et al**
**SAINT-GOBAIN RECHERCHE 39, quai Lucien Lefranc**
**F-93300 Aubervilliers Cedex (FR)**

**EP 0 442 768 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un vitrage résistant au feu constitué d'au moins deux feuilles de verre parallèles entre lesquelles est placée une couche faite d'un gel aqueux dont la phase aqueuse comporte un sel dissous.

Les vitrages résistant au feu de ce type sont connus par le brevet DE 27 13 849 C2. Leur principe de fonctionnement en cas d'incendie est le suivant: la chaleur commence par être absorbée par l'eau du gel aqueux et la vaporise. Dans une deuxième phase après l'évaporation de l'eau et la combustion de la phase organique solide du gel aqueux, le sel constitue une croûte mousseuse. Cette croûte solide reste en place même lorsque la chaleur augmente, elle constitue ainsi un bouclier isolant, celui-ci s'oppose alors a la transmission du rayonnement calorifique. Des vitrages qui fonctionnent selon ce principe permettent de fabriquer des produits coupe-feu ou pare-flamme, c'est à dire des produits qui sont conforme respectivement à la classe F ou à la classe G selon les définitions de la norme DIN 4102 chapitre 5 (septembre 1977).

Les vitrages résistant au feu du type précédent les plus connus sont constitués par un gel aqueux dont le polymère réalisant la phase solide du gel aqueux est à base de polyacrylamide. L'association avec l'eau se fait par polymérisation de méthacrylamide et d'acrylamide. La polymérisation se produit après addition de péroxydes ou de persels en présence d'un accélérateur et éventuellement d'un agent mouillant.

La toxicité de l'acrylamide est connue et son utilisation lors de la fabrication de vitrage résistant au feu n'est pas sans entraîner des problèmes.

Le but de l'invention est de trouver un système polymérisant en présence d'eau, c'est à dire finalement capable de constituer un gel, quine comprenne aucun composant toxique, qui soit complètement soluble dans l'eau salée et capable de polymériser dans ce milieu tout en générant un gel incolore et parfaitement transparent.

Selon l'invention le but est atteint en utilisant comme phase solide du gel aqueux un produit à base de chlorure de 2-hydroxy-3-méthacryloxypropyltriméthylammonium.

Le monomère du chlorure de 2-hydroxy-3-méthacryloxypropyltriméthylammonium qui, après polymérisation, fournira la phase solide du gel aqueux a pour formule développée :

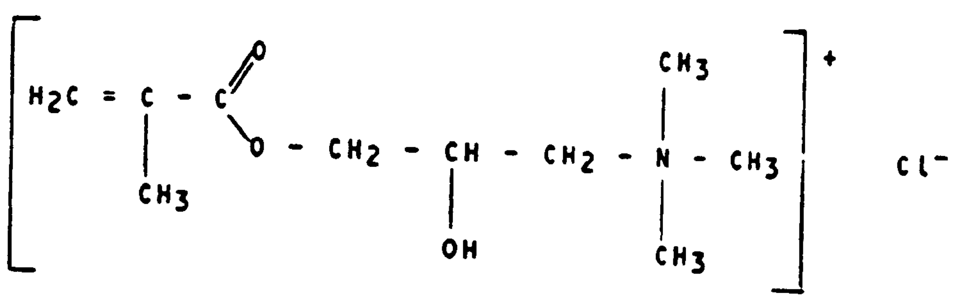

En ce qui concerne le composé utilisé conformément à l'invention, on n'a trouvé jusqu'à présent aucune manifestation de toxicité ni de phénomène néfaste à la santé. Etant donné que ce composé se comporte exactement lors d'essai au feu de manière identique au gel employé jusqu'à présent et qu'il fournit un gel incolore parfaitement transparent, il est particulièrement indiqué pour une utilisation conforme à l'invention. De plus en comparaison avec les dérivés de l'acrylamide il présente des qualités d'adhérence sur le verre améliorées, ce qui permet de supprimer les mesures habituellement préconisées pour favoriser l'accrochage du gel sur le verre.

De même que dans le cas des vitrages anti-feu à base de gel aqueux habituels le composé de l'invention peut avantageusement bénéficier d'une réticulation grâce à l'ajout d'un agent réticulant. On utilise avantageusement dans ce but le N-N'-méthylènebisacrylamide (MBA). Quant aux catalyseurs on peut sans problème utiliser les mêmes que ceux du gel antérieur à savoir le mélange d'un oxydant par exemple un pèroxyde mélangé à un composé accélérateur tel que le diéthylaminopropionitrile (DEAPN) ou bien la triéthanolamine dans le glycol (TEAG).

Selon les exigences que l'on désire voir respecter par le vitrage anti-feu et également en fonction de la consistance que l'on veut donner au gel, le dosage de la quantité de polymère dans le gel peut varier dans des limites importantes, de 5 à 50% en poids. La même remarque est valable pour les autres composants essentiels du composé gel + eau + sel. Ainsi la part de l'eau peut aller de 50 à 90 % en poids et celle du sel de 1 à 20 %.

La préparation du vitrage anti-feu se fait de la manière habituelle c'est à dire que tout d'abord on constitue un récipient en associant deux feuilles de verre à l'aide d'un cadre métallique réalisé en un acier résistant à

la corrosion. L'espace interne est ensuite rempli complètement à l'aide de la solution aqueuse gélifiable. A la fin du remplissage la polymérisation démarre et le gel se constitue.

On trouvera ci-après quelques exemples de compositions de solutions gélifiables.

Exemple 1

On mélange dans les proportions suivantes :

| | |
|---|---|
| Eau | : 400 g |
| NaCl | : 100 g |
| Chlorure de 2-hydroxy-3-méthacryloxypropyl-triméthylammonium | : 300 g |
| N-N'-méthylènebisacrylamide | : 0,5 g |

Après mélange, la solution est dégazée. On ajuste le pH à la valeur de 8,5. Enfin le catalyseur est introduit, il s'agit de 0,6 g de triéthanolamine dans le glycol (TEAG) et de 0,4 g de sodiumperoxodisulfate . Le tout est agité. La solution est alors introduite dans le récipient constitué par les deux feuilles de verre associées. Au bout de soixante minutes environ la solution est complètement gélifiée.

Exemple 2

Le mélange est constitué de :

| | |
|---|---|
| Eau | : 700 g |
| NaCl | : 130 g |
| Chlorure de 2-hydroxy-3-méthacryloxypropyl-triméthylammonium | : 170 g |
| N-N'-méthylène bisacrylamide | : 1 g |

Après mélange la solution est dégazée. Le pH est ajusté ici à 9. On ajoute alors 0,4 g de sodiumperoxo-disulfate ($Na_2S_2O_8$) et 0,6 g de triéthanolamine dans le glycol en tant que catalyseur. Après mélange la solution est utilisée pour remplir le vitrage. Après 50 mn la polymérisation est complète.

Exemple 3

Le mélange est constitué de :

| | |
|---|---|
| Eau | : 750 g |
| NaCl | : 150 g |
| Chlorure de 2-hydroxy-3-méthacryloxypropyl-triméthylammonium | : 120 g |
| N-N'-méthylènebisacrylamide | : 0,5 g |
| Phosphate trisodique ($Na_3PO_4$) | : 2 g |

Après mélange la solution est dégazée. Le phosphate trisodique que l'on a ajouté joue le rôle d'un inhibiteur de corrosion, il est destiné à supprimer tous risques de dégradation du cadre intercalaire métallique. Le pH de la solution est ajusté à 9. On ajoute alors 15 grammes d'une solution à 5 % de persulfate d'ammonium et 2

grammes de diéthylaminopropionitrile (DEAPN) comme catalyseur, on agite. Après remplissage du vitrage, au bout de 40 mn la gélification est complète.

## Revendications

1. Vitrage résistant au feu constitué d'au moins deux feuilles de verre maintenues à distance parallèlement l'une à l'autre, entre lesquelles est placée une couche d'un gel aqueux dont la phase aqueuse comporte un sel dissous **caractérisé en ce que** la phase solide du gel aqueux est constituée par le chlorure de 2-hydroxy-3-méthacryloxypropyltriméthylammonium polymérisé.

2. Vitrage résistant au feu selon la revendication 1 **caractérisé en ce que** le chlorure de 2-hydroxy-3-méthacryloxypropyltriméthylammonium est réticulé à l'aide d'un agent réticulant tel que la N-N'-méthylènbisacrylamide.

3. Procédé pour fabriquer un vitrage résistant au feu selon la revendication 1 dans lequel on rempli l'espace compris entre des feuilles de verre à l'aide d'une solution génératrice d'un gel aqueux et dans lequel le composé destiné après polymérisation à constituer la phase solide du gel est un dérivé de l'acide acrylique **caractérisé en ce que** le dérivé de l'acide acrylique est le chlorure de 2-hydroxy-3-méthacryloxypropyltriméthylammonium.

## Patentansprüche

1. Feuerwiderstandsfähige Verglasung aus wenigstens zwei auf parallelen Abstand zueinander gehaltenen Glasscheiben, zwischen denen eine Schicht aus einem wässrigen Gel angeordnet ist, dessen wässrige Phase ein gelöstes Salz enthält, **dadurch gekennzeichnet,** daß die feste Phase des wässrigen Gels aus der polymerisierten Verbindung 2-Hydroxy-3-methacryloxypropyltrimethylammonium-chlorid besteht.

2. Feuerwiderstandsfähige Verglasung nach Anspruch 1, dadurch gekennzeichnet, daß die Verbindung 2-Hydroxy-3-methacryloxypropyltrimethylammonium-chlorid mit Hilfe eines Vernetzungsmittels wie N-N'-Methylenbisacrylamid vernetzt ist.

3. Verfahren zur Herstellung einer feuerwiderstandsfähigen Verglasung nach Anspruch 1 durch Füllen des Hohlraums zwischen zwei Glasscheiben mit einer ein wässriges Gel bildenden Lösung, bei dem die nach der Polymerisation die feste Phase des Gels bildende Zusammensetzung ein Acrylsäurederivat ist, dadurch gekennzeichnet, daß das Acrylsäurederivat 2-Hydroxy-3-methacryloxypropyltrimethylammonium-chlorid ist.

## Claims

1. Fire-resistant pane, constituted of at least two glass sheets held apart parallel to one another, between which is placed a layer of an aqueous gel, the aqueous phase of which comprises a dissolved salt, characterized in that the solid phase of the aqueous gel is constituted of polymerized 2-hydroxy-3-methacryloxypropyltrimethylammonium chloride.

2. Fire-resistant pane according to Claim 1, characterized in that the 2-hydroxy-3-methacryloxypropyltrimethylammonium chloride is cross-linked by means of a cross-linking agent, such as N-N'-methylenebisacrylamide.

3. Method of making a fire-resistant pane according to Claim 1, in which the space contained between the glass sheets is filled with a solution generating an aqueous gel and in which the compound intended, after polymerization, for constituting the solid phase of the gel is a derivative of acrylic acid, characterized in that the derivative of acrylic acid is 2-hydroxy-3-methacryloxypropyltrimethylammonium chloride.